# EUROPEAN PATENT APPLICATION

(11) **EP 2 239 238 A1**
(43) Date of publication of application: **13.10.2010**
(21) Application number: 09157380.8
(22) Date of filing: 06.04.2009
(51) Int. Cl.: C03C 17/42, B41M 5/52

(54) **Glass article**

(71) Applicant: AGC Glass Europe, 1170 Bruxelles (Watermael-Boitsfort) (BE)
(72) Inventor: Lecolley, François, 6040, Jumet (BE); Debouny, Claire, 6140, Jumet (BE)
(74) Representative: Verbrugge, Vivien François Emeric

(57) **Abstract**

The invention concerns a glass article (1) comprising (i) a glass sheet (2), (ii) an adhesion layer (3) provided on at least part of said glass sheet and (iii) an ink layer (4), forming an image, provided on at least part of said adhesion layer. According to the invention, the adhesion layer (4) comprises an acrylic resin.

## Description

### 1. Field of the Invention

This invention relates to a glass article comprising an ink layer forming an image.

### 2. Description of the Related Art

When depositing inks directly on a substrate, so as to form an image, one commonly encounters adhesion problems, especially after moisture exposure. Indeed, the deposited ink often shows undesirable phenomenon like (i) blistering, (ii) peeling off and/or (iii) migration from its original locations on the substrate (known as "bleeding effect"). These problems occur especially when the chosen substrate is semi-porous or non-porous, like metal, wood, ceramics, plastic or glass.

Two main ways of enhancing adhesion of an ink on a substrate, and in particular on glass, are already known in the art.

The first way corresponds to modifying the ink formulation. Several alternatives are known but the main one resides in the use of an additive, acting as an adhesion promoter, in the ink composition. Within that context, W02006/138650 A1 discloses a particular ink formulation for inkjet printing a glass substrate. In that case, the ink adhesion on glass is improved by a particular ink composition including an organic polymer. An adhesion promoter may also be added, further enhancing adhesion. Such a well-known adhesion promoter is, for example, silane. Nevertheless, one should take particularly care when introducing such compound because it may affect the overall stability of the composition. For this reason, they sometimes need to be added immediately before the implementation of the ink, and resulting therefore in additional processing steps.

The second way for improving ink adhesion on a substrate corresponds to the interposition of a silane primer between the ink and the substrate itself. As a matter of fact, it is known for a long time in the art that pre-treatment of a substrate with a silane helps to assure good adherence of a subsequent coating. This solution is, for example, cited in W02006/138650 in the particular case of glass. Other precoat materials have also been disclosed for improving ink adhesion on a substrate in general. They correspond to either porous silica coatings, gelatine coatings, or coating containing carbamates or ammonium salts.

Within the known solutions, adhesion of the ink continues to be unsatisfactory when used on glass, and especially under wet conditions for which the undesired effects, such as blistering, peeling off and/or bleeding, are amplified.

### 3. Objectives of the Invention

The invention aims, in particular, to solve the disadvantages of prior art. More particularly, an objective of the present invention according to at least one embodiment is to provide a way to improve the adhesion of ink on a glass article.

Another objective of the present invention according to at least one embodiment is to provide a solution which is compatible at the same time with the glass substrate and the ink and which provides an improved adhesion of the ink even when exposed to humid conditions for a long period.

Another objective of the present invention according to at least one embodiment is to allow using a classical ink without adapting its formulation, as well as using a classical process for depositing it on the glass substrate.

Another objective of the present invention according to at least one embodiment is to provide such a solution which is simple and cost effective.

### 4. Summary of the Invention

According to a particular embodiment, the invention concerns a glass article comprising
a) a glass sheet;
b) an adhesion layer provided on at least part of said glass sheet and comprising an acrylic resin;
c) an ink layer, forming an image, provided on at least part of said adhesion layer.

According to another particular embodiment, the invention concerns a method for forming an image on a glass article comprising a glass sheet, said method comprising the following steps :
a) depositing on at least part of said glass sheet an adhesion layer comprising an acrylic resin,
b) depositing an ink layer, forming an image, on at least part of said adhesion layer.

According to another particular embodiment, the invention concerns the use of a layer comprising an acrylic resin to promote adhesion of an ink on at least part of a glass sheet.

According to the invention, using an acrylic-based layer as adhesion layer provides a good adhesion of the ink on the glass sheet under wet conditions. The inventors have surprisingly found that a layer comprising an acrylic resin, classically used as binder in paints, which is interposed between an ink and a glass substrate improves significantly the adhesion of the ink.

### 5. Brief Decription of the Drawings

Other characteristics and advantages of the invention will more clearly appear with the reading of the following description of at least one preferred embodiment, given as simple illustrative and non restrictive example, and annexed drawings among which:
figure 1 is an enlarged, cross-sectional view of a glass article according to the invention,
figure 2 is a variation of the embodiment of figure 1,

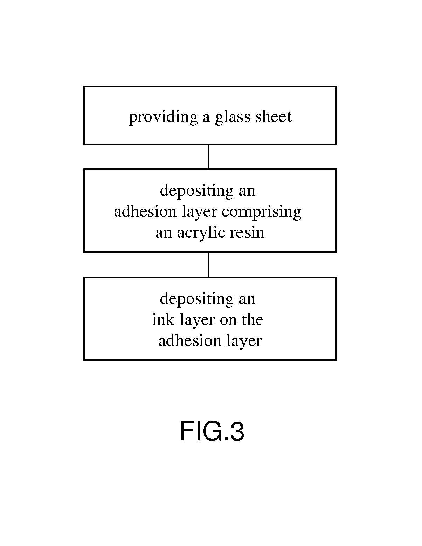

figure 3 is a schematic representation of the method for forming an image on a glass article according to the invention.

### 6. Description of at least one embodiment of the Invention

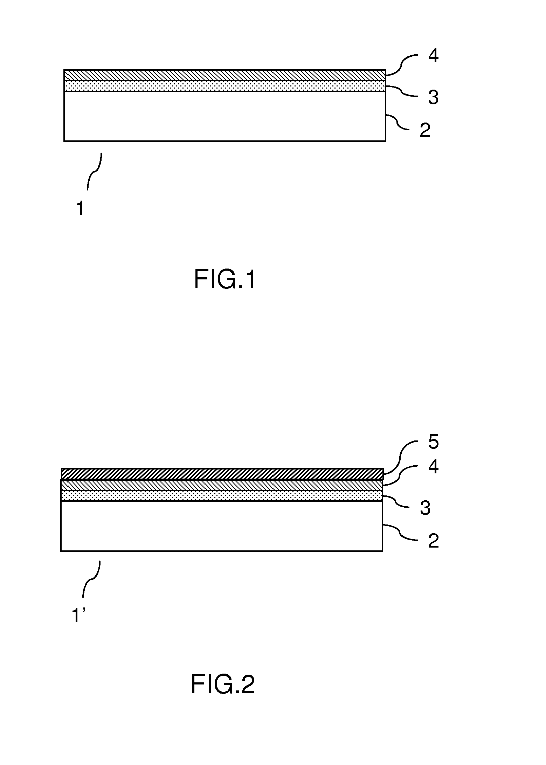

As illustrated in Figure 1, the glass article (1) according to the invention comprises a glass sheet (2), an adhesion layer (3) provided on at least part of said glass sheet (2) and an ink layer (4) provided on at least part of said adhesion layer (3).

The glass sheet (2) may be made of soda-lime glass. By soda-lime glass, it is meant a glass having the following composition, expressed in percentages by weight:

| | |
|---|---|
| SiO₂ | 60 to 75%, |
| Na₂O | 10 to 20%, |
| CaO | 0 to 16%, |
| K₂O | 0 to 10%, |
| MgO | 0 to 10%, |
| Al₂O₃ | 0 to 5%, |
| BaO | 0 to 2%, with both further conditions: |
| alkaline-earth oxides (BaO + CaO + MgO) totalising from 10 to 20%, | |
| alkaline oxides (Na₂O + K₂O) totalising from 10 to 20%. | |

Minor additives may as well be present in very small proportions in the glass composition, like colourants (Fe₂O₃, FeO, CoO, Nd₂O₃, ...), redox components (NaNO₃, Na₂SO₄, coke, ...) and the like.

The glass sheet (2) according to the invention may be a float glass. It may have a thickness of from 0.5 to 15 mm. The glass sheet (2) may be made of clear or extra-clear glass. It may also be thermally toughened.

According to the invention, the glass article (1) comprises a glass sheet (2) covered on at least part of its surface by an adhesion layer (3) comprising an acrylic resin, that is to say, polymers or copolymers of one or more alkyl esters of acrylic acid or methacrylic acid. The adhesion layer according to the invention preferably comprises between 50 to 90 % in weight of acrylic resin. More preferably, it comprises between 60 to 80 % in weight of acrylic resin. The acrylic resin according to the invention is preferably a methacrylic resin.

The adhesion layer (3) may further comprise a melamine resin and an epoxy resin. This particular composition allows providing a further improved adhesion of the ink on the glass sheet under wet conditions. By melamine resin, it is meant a material made from polymerization of melamine and formaldehyde. The melamine resin according to the invention is any melamine resin classically used as a paint base or binder. The adhesion layer (3) preferably comprises between 5 to 35 % in weight of melamine resin. More preferably, it comprises between 10 to 25 % in weight of melamine resin. By epoxy resin, it is meant an epoxide polymer. The epoxy resin according to the invention is any epoxy resin classically used as a paint base or primer. The adhesion layer according to the invention preferably comprises between 5 to 35 % in weight of epoxy resin. More preferably, it comprises between 10 to 25 % in weight of epoxy resin.

The adhesion layer (3) may be curable under infrared rays.

Advantageously, the adhesion layer is transparent. By "transparent", it is intended a layer having the property of transmitting light so that an image lying beyond is seen clearly. When an ink is deposited on a glass sheet for forming an image, said sheet could act as a protecting means for the image, just like in classical picture frames which often display a pane of glass or plastic in order to protect the picture. In that case, the adhesion layer must be practically invisible under ideal lighting conditions in order to be able to observe the image through the glass sheet from the side opposite to that which carries the image. Thus, the present invention further provides a solution for allowing an improved adhesion of an ink on a glass sheet and allowing at the same time an observation of the image formed by the ink through the glass sheet from the side opposite to that which carries the image.

The adhesion layer (3) may have a thickness varying from 1 to 200 micrometers.

The adhesion layer (3) is deposited on the glass sheet by any manner known in the art. Non-limiting examples of deposition process for the adhesion layer (3) are the processes of roller coating, bar coating, curtain coating, the spray process or flow process.

The glass article may comprise a silane primer between the glass sheet (2) and the adhesion layer (3). The silane primer allows a better adhesion between the glass sheet (2) and the adhesion layer (3) and therefore confers a good stability to the whole stacking: glass/adhesion layer/ink. According to this particular embodiment, the method of the invention further comprises an additional step of depositing a silane primer on the glass sheet before depositing the adhesion layer. The silane primer may be deposited by any manner known in the art. Silane commonly known in the art is used in this embodiment.

Advantageously, the adhesion layer comprises an ultraviolet-blocking agent. By ultraviolet-blocking agent, it is meant an additive which allows absorbing the ultraviolet rays. Ultraviolet radiation emitted by the sun is one of the major factors contributing to colour degradation of inks. The presence of such an ultraviolet-blocking agent thus allows avoiding or limiting this undesirable effect. The ultraviolet-blocking agent may be a benzotriazole derivative like the well-known TINUVIN^{®}.

According to the invention, the glass article (1) comprises a glass sheet (2), an adhesion layer (3) and an ink layer (4) provided on at least part of said adhesion layer (3). By ink, it is intended a medium containing a carrier (fluid phase) and colorants (pigments and/or dyes). The carrier may include organic solvent(s), water, polymers(s), and additives like lubricants, solubilizers and surfactants.

Organic solvent-based inks may be used for forming the ink layer (4). Such type of inks dries physically, by solvent evaporation. Classical solvents for such inks are alcohols, acetone, acetates and glycol ethers.

Water-based inks may be used for forming the ink layer (4). These inks evaporate off mostly water when they dry, and they are therefore preferred compared to the solvent-based inks from the point of view of environment, safety and toxicity.

UV(ultraviolet)-curable inks may used for forming the ink layer (4). These inks must be cured to dry under intense UV radiations. Compared to solvent-based inks, UV-curable inks reduce the amount of solvents released into the air. Their main advantage is their quick curing/drying time resulting in their suitability in speed printing processes. An UV-curable ink comprises an UV-polymerizable material, coloring agents and a photoinitiator. The UV polymerizable material is mainly formed of oligomers and/or monomers. The coloring agents is any type of pigment, dye or the like, which will withstand UV treatment. They may be in a liquid or solid form (powder). Mixtures of different pigments and/or dyes may be used. The photoinitiator is selected to respond to the wavelength of UV radiation to start photoinitiation. A mixture of different photoinitiators may be used. The UV-curable ink composition may also comprise a diluent (or thinner agent), a photoactivator and/or a wetting agent.

The method of the invention implementing an UV-curable ink comprises an additional step of curing the ink by exposure to ultraviolet rays. The curing step may be carried out consecutively to the ink deposition. Preferably, the curing step is implemented practically simultaneously to the ink deposition. The curing step may also been repeated.

When an UV-curable ink is deposited in the glass article of the invention, an UV-cured ink layer is formed consecutively to the curing step.

The ink may be deposited on the adhesion layer by any manner known in the art. Non-limiting examples of deposition process for the ink layer are inkjet, laser printing or screen-printing.

In a preferred embodiment, the ink is deposited by inkjet. The advantages of inkjet techniques are their quiet operations, their capability to produce high quality coloured images and their high deposition speed. But within the context of the present invention, inkjet is particularly suited because it allows ink deposition on rigid, wide and thick substrates like glass sheets.

The inkjet process is a well-known printing process wherein a liquid or a fused solid ink is jetted or ejected as droplets from one or a plurality of printheads, e.g. nozzles or slits. The inkjet technique used in the present invention is selected from the two main modes known for the dispensing of the droplets: the continuous mode and the drop-on-demand mode (also called piezoelectric mode). In the continuous mode, ink is continuously ejected by the printing head(s). In the drop-on demand mode, droplets are discontinuously expelled as required by means of power pulses. These techniques are well established and will not be further discussed. The skilled man, when choosing one of these modes will know how to adapt the nature of the ink and the deposition conditions in order to obtain the desired result.

As illustrated in Figure 2, the glass article (1') comprises a glass sheet (2), an adhesion layer (3), an ink layer (4) provided on said adhesion layer (3) and a top layer (5) comprising an acrylic resin and provided on said ink layer (4). This top layer (5) is used in order to increase the mechanical durability of the face of the glass article which carries the image and therefore protecting it from scratches. Moreover, this top layer (5) has a good adhesion to the ink layer.

According to this particular embodiment, the method of the invention comprises an additional step of depositing, on said ink layer, a top layer which comprises an acrylic resin.

The acrylic resin of said top layer (5) may be identical or different as the one used for the adhesion layer (3).

The glass article according to this embodiment may also comprise a silane primer between the ink layer (4) and the said top layer (5). The silane primer allows a better adhesion between the top layer (5) and the ink layer (4) and therefore confers a good stability to the whole stacking: glass/adhesion layer/ink/top layer. According to this embodiment, the method of the invention further comprises an additional step of depositing a silane primer between the ink layer and the top layer. Silane commonly known in the art is used in this embodiment.

The top layer (5) may be transparent. Alternatively, the top layer (5) may comprise colorants (pigments and/or dyes). Because of the opacity of the top layer (5), such an embodiment provides a better aesthetical rendering of the image formed by the ink layer when looking from the side opposite to that which carries the image. Preferably, the top layer (5) of this embodiment comprises white pigments.

The top layer (5) may be curable under infrared rays.

The top layer (5) is deposited by any manner known in the art. Non-limiting examples of deposition process for the top layer are the processes of roller coating or curtain coating, the spray process or flow process.

The glass sheet according to the invention may also be coated by a functional layer on its face opposite to that carrying the adhesion and ink layers. For example, it may be coated by an antireflective or an anti-glare layer. Such kind of layer enables to improve the aesthetical rendering of the image when looking from the side opposite to that which carries the image, by increasing the light transmission and/or reducing unsightly, annoying light reflections of the glass sheet. The antireflective property may also be generated in the glass article according to the invention by an acid treatment or etching of the side of glass sheet opposite to that carrying the image.

The invention is not limited to the described embodiments but also covers combinations of embodiments and/or alternatives.

The invention will now be illustrated below by examples aiming at better describing the invention, without by no means trying to limit its scope.

### Example 1 (in accordance with the invention):

A glass article according to the invention has been prepared as follows:
A clear glass sheet of soda-lime glass (4 mm thickness, 50 cm x 50 cm) has been washed in the normal manner. It has been pre-treated by spraying a 2% Silquest® A-1120 (General Electric) silane aqueous solution. After being dried, the glass sheet has then been covered by an adhesion layer using a bar coater. The adhesion layer was a transparent IR-curable composition comprising 80% of a methyl methacrylic resin, 10% of a melamine-formaldehyde, 10% of a bisphenol-A epoxy resin. The adhesion layer has then been dried at 150°C for 15 minutes in a laboratory static infrared oven. Thickness of the adhesion layer, once dried, was approximately 40 µm.

The sheet of glass bearing the adhesion layer has subsequently been used as a substrate for depositing an UV-curable ink layer and therefore forming a coloured image. The ink deposition has been implemented by digital inkjet printing in a vitrophany mode (image inverted as when viewed in a mirror) with a Vutek PressVu® 320 UV-curing printer, using a printing speed of 60 inch per second and an UV power input of 100%.

The condensation test is used to assess the behaviour of the glass article obtained in humid ambient atmospheres and to pinpoint any defects of the protection of the glass article against corrosion. Full details of this test are set out in the standard DIN50 017. The conditions used herein are: 98% relative humidity, temperature of 40°C, during 20 days. No blistering, i.e. local peeling off of the acrylic adhesion layer and/or ink should be visible after the test.

The glass article obtained as described above has shown after a 20-days condensation test, no blistering, peeling off or bleeding phenomenon, indicating that the adhesion of the ink on the glass sheet as well as the stability of the whole stacking are excellent.

### Example 2 (in accordance with the invention):

A glass article according to the invention has been manufactured on a production line in which flat sheets of soda lime float glass were conveyed along the line by a roller conveyor.

A clear glass sheet has first been washed in the normal manner and has then been covered by an adhesion layer using a curtain coater. The adhesion layer was a transparent IR-curable composition comprising 70% of a methyl methacrylic resin, 16% of a melamine-formaldehyde, 12% of a bisphenol-A epoxy resin and 2% of Tinuvin® 5236 (CIBA). The adhesion layer has then been dried at 150°C for 6 minutes in a laboratory static infrared oven. Thickness of the adhesion layer, once dried, was approximately 30 µm.

The sheet of glass bearing the adhesion layer has subsequently been used as a substrate for depositing an UV-curable ink layer and therefore forming a coloured image. The ink deposition has been implemented by digital inkjet printing in a vitrophany mode (image inverted as when viewed in a mirror) with a Vutek PressVu® 320 UV-curing printer, using a printing speed of 40 inch per second, an UV power input of 100%, and allowing two passes for the curing.

The printed glass sheet obtained has been pre-treated by spraying on its face carrying the ink layer a 2% Silquest® A-2120 (General Electric) silane aqueous solution. After being dried, it has then been covered on a conveyor line with an IR-curable top layer comprising an acrylic resin and white pigments, using a curtain coater. The white top layer has then been dried in a similar manner to the adhesion layer (Example 2). Thickness of the top layer, once dried, was approximately 30 µm.

The glass article obtained from Example 2 has shown after a 20-days condensation test, no blistering, peeling off or bleeding phenomenon, indicating that the adhesion of the ink on the glass sheet as well as the stability of the whole stacking are also excellent.

### Example 3 (comparative example):

A glass article has been prepared as follows:
A clear glass sheet of soda-lime glass (4 mm thickness, 50 cm x 50 cm) has been washed in the normal manner. It has pre-treated by spraying a 2% Silquest® A-2120 (General Electric) silane aqueous solution. After being dried, the glass sheet has subsequently been used as a substrate for depositing an UV-curable ink layer and therefore forming an image. The ink deposition has been implemented by digital inkjet printing in a vitrophany mode (image inverted as when viewed in a mirror) with a Vutek PressVu® 320 UV-curing printer, using a printing speed of 60 inch per second and an UV power input of 100%.
The glass article obtained as described above has shown, after a 7-days condensation test, "cracks" in the ink layer and a blistering phenomenon in punctual zones of the ink layer, indicating clearly that the adhesion of the ink on the glass sheet is insufficient in humid conditions.

## Claims

1. Glass article comprising
a) a glass sheet (2);
b) an adhesion layer (3) provided on at least part of said glass sheet (2);
c) an ink layer (4), forming an image, provided on at least part of said adhesion layer
**characterized in that** said adhesion layer (3) comprises an acrylic resin.

2. Glass article according to claim 1, **characterized in that** said adhesion layer (3) further comprises a melamine resin and an epoxy resin.

3. Glass article according to claim 1 or 2, **characterized in that** said adhesion layer (3) is transparent.

4. Glass article according to any of the preceding claims,
**characterized in that** said article further comprises a silane primer between the glass sheet (2) and the adhesion layer (3).

5. Glass article according to any of the preceding claims,
**characterized in that** the ink is an UV-cured ink.

6. Glass article according to any of the preceding claims,
**characterized in that** it further comprises a top layer (5) which is deposited on said ink layer (4) and which comprises an acrylic resin.

7. Method for forming an image on a glass article comprising a glass sheet, said method comprising the following steps :
a) depositing an adhesion layer on at least part of said glass sheet
b) depositing an ink layer, forming an image, on at least part of said adhesion layer
**characterized in that** said adhesion layer comprises an acrylic resin.

8. Method according to claim 7, **characterized in that** said adhesion layer further comprises a melamine resin and an epoxy resin.

9. Method according to claim 7 or 8, **characterized in that** said adhesion layer is transparent.

10. Method according to claims 7 to 9, **characterized in that** said method comprises an additional step of depositing a silane primer on said glass sheet before depositing the adhesion layer.

11. Method according to claims 7 to 10, **characterized in that** said ink is an UV-curable ink.

12. Method according to claim 11, **characterized in that** said method further comprises an additional step of curing said ink by exposure to ultraviolet rays.

13. Method according to claims 7 to 12, **characterized in that** depositing the ink layer is carried out by inkjet.

14. Method according to claims 7 to 13, **characterized in that** it said method comprises an additional step of depositing, on said ink layer, a top layer which comprises an acrylic resin.

15. Use of a layer comprising an acrylic resin to promote adhesion of an ink on at least part of a glass sheet.
